# FASCICULE DE BREVET EUROPEEN

(11) **EP 3 874 136 B1**
(45) Date de publication et mention de la délivrance du brevet: **09.08.2023**
(21) Numéro de dépôt: 19835705.5
(22) Date de dépôt: 29.11.2019
(51) Int. Cl.: F02C 7/25, F01D 25/24, F01D 9/06, B64D 29/06, F02C 7/28

(54) **DISPOSITIF DE RÉSISTANCE AU FEU AMÉLIORÉ DESTINÉ À ÊTRE INTERPOSÉ ENTRE UNE EXTRÉMITÉ DE MAT D'ACCROCHAGE DE TURBOMACHINE D'AÉRONEF, ET UN CAPOTAGE DE LA TURBOMACHINE DÉLIMITANT UN COMPARTIMENT INTER-VEINE**
VERBESSERTE BRANDSCHUTZVORRICHTUNG ZUR POSITIONIERUNG ZWISCHEN EINEM ENDE EINER STREBE FÜR EINE FLUGZEUG-TURBOMASCHINE UND EINER VERKLEIDUNG DIESER TURBOMASCHINE ZUR BEGRENZUNG EINER ZWISCHENSTROMKAMMER
IMPROVED FIRE RESISTANCE DEVICE DESIGNED TO BE PLACED BETWEEN ONE END OF A MOUNTING STRUT FOR AN AIRCRAFT TURBOMACHINE AND A COWLING OF SAID TURBOMACHINE, DELIMITING AN INTER-FLOW COMPARTMENT

(30) Priorité: 14.12.2018 FR 1872912
(43) Date de publication de la demande: 08.09.2021
(73) Titulaire: SAFRAN AIRCRAFT ENGINES, 75015 Paris (FR)
(72) Inventeur: JACON, Bruno, Alexandre, Didier, 77550 Moissy-Cramayel (FR); SIMONOTTI, Hervé, 77550 Moissy-Cramayel (FR)
(74) Mandataire: Brevalex
(86) Numéro de dépôt international: PCT/FR2019/052845
(87) Numéro de publication internationale: WO 2020/120863

(56) Documents cités:
- FR-A1- 2 920 215
- US-A1- 2018 156 051
- US-A1- 2018 156 130
- US-A1- 2018 163 631

## Description

### DOMAINE TECHNIQUE

L'invention concerne la fonction de résistance au feu entre un compartiment inter-veine d'une turbomachine d'aéronef à double flux, et une zone amont de mât d'accrochage de cette turbomachine. Elle vise en particulier à éviter qu'un feu initié dans le compartiment inter-veine puisse se propager dans la zone amont de mât d'accrochage.

L'invention s'applique à tout type de turbomachine à double flux, et en particulier à un turboréacteur.

### ETAT DE LA TECHNIQUE ANTERIEURE

Dans une turbomachine d'aéronef à double flux, il est habituellement prévu, en aval de la soufflante, un ou plusieurs bras traversant radialement la veine secondaire. Ce bras est typiquement agencé de manière à relier un compartiment de soufflante situé autour de la virole extérieure d'un carter intermédiaire, à un compartiment inter-veine. Ces deux compartiments logent de manière classique des équipements et des servitudes, tandis que le bras interposé entre eux deux permet le passage de différents éléments tels que des câbles électriques, et/ou des canalisations fluidiques.

L'extrémité radialement interne d'un tel bras est raccordée à un anneau amont, délimitant en partie le compartiment inter-veine radialement vers l'extérieur. Cet anneau forme ainsi l'extrémité amont de l'ensemble des capotages formant l'enveloppe extérieure du compartiment inter-veine. Pour assurer la jonction entre le bras et l'anneau amont, il est prévu d'intercaler entre eux deux capotages de raccord, qui se situent respectivement latéralement de part et d'autre d'une extrémité amont du mât d'accrochage.

Le mât d'accrochage, qui sert à fixer la turbomachine sur un élément de voilure de l'aéronef, peut en effet présenter une extrémité amont à proximité de la jonction entre le bras traversant la veine secondaire, et l'anneau amont du compartiment inter-veine. Se pose alors la problématique de la fonction anti-feu, puisqu'il est recherché à éviter la propagation d'une éventuelle flamme se déclarant dans le compartiment inter-veine, en particulier pour interdire à cette flamme d'atteindre la zone amont du mât d'accrochage située à proximité.

Il existe par conséquent un besoin d'aboutir à un dispositif de résistance au feu dont la conception garantit la fonction désirée, autorise sa facile intégration dans l'environnement dense et complexe de la zone concernée, et permet une fabrication aisée.

Un dispositif de résistance au feu selon l'art antérieur est divulgué dans le document US2018156130.

### RESUME DE L'INVENTION

Pour répondre à cette problématique, l'invention a tout d'abord pour objet un dispositif de résistance au feu destiné à être interposé entre une extrémité amont d'un mât d'accrochage d'une turbomachine d'aéronef à double flux, et un capotage de raccord équipant cette turbomachine, ledit capotage de raccord étant destiné à raccorder un anneau amont délimitant radialement vers l'extérieur une partie d'un compartiment inter-veine, à un bras traversant radialement une veine secondaire de la turbomachine. Selon l'invention, le dispositif comprend :
- une structure de contact comprenant une première lèvre de contact présentant de préférence une section en C et définissant une première extrémité de contact s'étendant le long d'une première ligne, de préférence une ligne courbe, la structure de contact comprenant également, à l'une des extrémités longitudinales de la première lèvre de contact, un tronçon d'extrémité dont l'une des extrémités est ouverte et se trouve dans la continuité de la première lèvre, et dont l'autre extrémité est obturée ;
- une portion de support ; et
- une seconde lèvre de contact portée par la portion de support via une zone de jonction qui porte le tronçon d'extrémité de la structure de contact, la seconde lèvre de contact présentant une seconde extrémité de contact s'étendant le long d'une seconde ligne distincte de la première ligne, la seconde lèvre de contact présentant à l'une de ses extrémités une portion d'obstruction en saillie selon la seconde ligne, la portion d'obstruction étant située à distance et en regard de l'extrémité obturée du tronçon d'extrémité.

L'invention se révèle ainsi avantageuse en ce qu'elle prévoit un dispositif de résistance au feu qui s'avère performant, qui s'intègre parfaitement dans son environnement, et dont la conception rend sa fabrication particulièrement aisée et peu coûteuse, par exemple en le réalisant monobloc.

L'aspect monobloc est effectivement rendu possible par la géométrie simple du dispositif selon l'invention, notamment par l'emploi de lèvres de contact. Celles-ci ne requièrent d'ailleurs pas l'utilisation d'insert lors de la fabrication du dispositif, par opposition par exemple à la mise en oeuvre de zones de contact tubulaires, dites à bourrelet ou à boudin. De plus, une lèvre se révèle habituellement facilement déformable, de sorte qu'il n'est pas nécessaire de lui faire subir une opération spécifique de précontrainte après son assemblage. La déformation requise pour garantir sa fonction de barrière au feu peut simplement résulter de l'appui d'un élément environnant, comme par exemple l'appui d'un joint de capot mobile de nacelle destiné à s'écraser dans la zone.

Il est noté que ces avantages ne sont pas remis en cause par la présence du tronçon d'extrémité obturé à l'une de ses extrémités, étant donné que ce dernier reste ouvert à son autre extrémité. Cette caractéristique garantit notamment la fabrication aisée de la pièce monobloc. Ce tronçon à extrémité obturée, agencé à l'une des extrémités longitudinales de la première lèvre de contact, permet localement de maîtriser plus facilement l'étanchéité, grâce à sa section transversale plus étendue que celle de la première lèvre en forme de C qu'il prolonge.

En outre, la forme en C de la première lèvre de contact se révèle avantageuse en ce qu'elle présente une compatibilité avec les dispositifs de résistance au feu existants, incorporant des joints à boudins équipés à leurs extrémités longitudinales de pions de raccord. En effet, l'extrémité longitudinale de la première lèvre de contact d'un dispositif de résistance au feu selon l'invention peut ainsi parfaitement coopérer avec le pion de raccord d'un dispositif de résistance au feu complémentaire, déjà installé sur l'ensemble propulseur. Cette complémentarité de formes facilite la jonction entre les deux dispositifs, qui est assimilable à un emboîtement du pion dans la section ouverte de la première lèvre de contact.

En d'autres termes, la forme en C de la première lèvre permet de faciliter le raccordement du dispositif selon l'invention à un dispositif classique, équipant déjà l'ensemble propulseur. Par conséquent, lorsque cet ensemble propulseur comprend deux dispositifs de résistance au feu raccordés de manière à se trouver dans la continuité l'un de l'autre, le remplacement d'un seul des deux dispositifs devient possible. La maintenance de ces dispositifs de résistance au feu s'en trouve facilitée et sécurisée.

En outre, avec la structure de contact et la seconde lèvre de contact, le dispositif de résistance au feu selon l'invention permet de former deux barrières physiques distinctes et sensiblement contigües. L'une est prévue pour stopper l'éventuel feu dans le compartiment inter-veine afin qu'il ne se propage pas circonférentiellement vers la face latérale du mât ni radialement vers une face d'extrémité amont de ce dernier, et l'autre est prévue de sorte que cet éventuel feu ne se propage pas axialement vers l'aval, le long de cette même face latérale du mât.

L'une des particularités de l'invention réside dans la présence de la portion d'obstruction en saillie au sein de la seconde lèvre de contact. Cette portion d'obstruction vient recouvrir, sans la contacter, l'extrémité obturée de la portion d'extrémité prévue au sein de la structure de contact, dans la continuité de la première lèvre. En fonctionnement, lorsque cette portion d'extrémité se déforme en laissant éventuellement apparaître une section d'ouverture à la flamme, la portion d'obstruction qui la recouvre réduit avantageusement les risques de pénétration axiale de cette flamme dans la zone amont du mât, voire les réduit à néant. Le jeu conservé entre la portion d'obstruction de la seconde lèvre, et l'extrémité obturée prolongeant la première lèvre, permet de ne pas contrarier la déformation de la structure de contact durant le fonctionnement de l'ensemble propulseur. Ce jeu forme, avec la portion d'obstruction de la seconde lèvre et l'extrémité obturée prolongeant la première lèvre, une sorte de chicane réduisant considérablement le risque que la flamme l'emprunte jusqu'à se propager à travers l'éventuelle section d'ouverture évoquée ci-dessus, émanant de la déformation de l'extrémité obturée de la structure de contact.

L'invention prévoit de préférence au moins l'une des caractéristiques techniques optionnelles suivantes, prises isolément ou en combinaison.

La portion d'obstruction présente une première face de contact formant une partie de la seconde extrémité de contact de la seconde lèvre de contact, ainsi qu'une seconde face opposée à la première et s'éloignant de la première face de contact en se rapprochant de l'extrémité obturée du tronçon d'extrémité, la seconde face étant préférentiellement courbe.

L'extrémité obturée du tronçon d'extrémité présente une forme bombée en direction de la portion d'obstruction appartenant à la seconde lèvre de contact. Le tronçon d'extrémité peut également incorporer une section à boudin prolongée par l'extrémité obturée, sans sortir du cadre de l'invention.

Dans la direction de la seconde ligne, la portion d'obstruction se termine en retrait par rapport à la première extrémité de contact. Cela limite les risques que cette portion d'obstruction entre en contact avec l'élément contre lequel appuie la première extrémité de contact, et se déforme suite à ce contact.

Comme évoqué précédemment, le dispositif est préférentiellement monobloc.

Ladite seconde ligne est droite, et de préférence sensiblement orthogonale à une première surface de contact sensiblement plane dans laquelle s'inscrit la première ligne courbe. Néanmoins, d'autres formes de ligne et d'autres inclinaisons peuvent être retenues en fonction des surfaces d'appui à contacter, sans sortir du cadre de l'invention.

Le dispositif comprend également une portion de fixation portant la première lèvre de contact, ladite portion de fixation étant préférentiellement traversée par des trous de passage d'éléments de fixation.

La portion de support porte, à l'opposé de la seconde lèvre et de sa zone de jonction, des éléments allongés de fixation. Ces éléments allongés de fixation peuvent alors facilement coopérer avec le capotage de raccord, pour un meilleur maintien sur ce dernier.

Le dispositif est formé par la superposition d'au moins une couche en matériau élastomère, de préférence en matériau élastomère silicone, et d'au moins une couche fibreuse, de préférence en céramique, verre ou meta-aramide (poly(m-phénylèneisophtalamide)). D'autres types de couches sont néanmoins possibles, sans sortir du cadre de l'invention. Il est noté qu'une couche de tissu céramique s'avère particulièrement efficace pour la fonction de résistance au feu, tandis qu'une couche de fibres de verre permet de raidir l'empilement, et de limiter le fluage d'élastomère silicone dans le plan orthogonal à la direction de superposition des couches, en cas de sollicitation mécanique selon cette dernière direction. Enfin, une couche de fibres de meta-aramide permet également un tel raidissement.

De préférence, une ou plusieurs couches fibreuses s'étendent sur toute la longueur de la première lèvre de contact et du tronçon d'extrémité, de même qu'une ou plusieurs couches fibreuses s'étendent sur toute la longueur de la seconde lèvre de contact, y compris dans sa portion d'obstruction.

L'invention a également pour objet un ensemble propulseur pour aéronef comprenant une turbomachine d'aéronef à double flux, ainsi qu'un mât d'accrochage de la turbomachine destiné à sa fixation sur un élément de voilure de l'aéronef,
la turbomachine comportant un compartiment inter-veine agencé entre une veine primaire et une veine secondaire de la turbomachine, ainsi qu'un bras traversant radialement une veine secondaire et communiquant avec le compartiment inter-veine, ce dernier étant en partie délimité radialement vers l'extérieur par un anneau amont raccordé au bras à l'aide de deux capotages de raccord agencés respectivement de part et d'autre d'une extrémité amont du mât d'accrochage, selon une direction transversale de l'ensemble propulseur,
l'extrémité amont du mât d'accrochage comprenant deux faces latérales, ainsi qu'une portée périphérique suivant le contour d'une base de cette extrémité amont de mât.

Selon l'invention, l'ensemble propulseur comprend également, associé à au moins l'un des deux capotages de raccord, un dispositif de résistance au feu tel que décrit précédemment, interposé entre l'extrémité amont du mât d'accrochage et le capotage de raccord auquel est fixé le dispositif.

De préférence, la première extrémité de contact de la première lèvre de contact est en appui sur la portée périphérique de l'extrémité amont du mât d'accrochage, et la seconde extrémité de contact de la seconde lèvre de contact est en appui sur la face latérale correspondante de l'extrémité amont du mât d'accrochage.

De préférence, la première ligne courbe s'inscrit dans une première surface de contact sensiblement plane, et sensiblement parallèle à la direction transversale ainsi qu'à une direction longitudinale de l'ensemble, et la seconde ligne définie par la seconde lèvre de contact est une droite s'étendant sensiblement parallèlement à une direction verticale de l'ensemble.

De préférence, la seconde lèvre de contact est préférentiellement contrainte entre la face latérale de l'extrémité amont du mât d'accrochage, et un joint de capot mobile de nacelle.

Enfin, l'ensemble propulseur comprend également, associé à l'autre des deux capotages de raccord, un dispositif de résistance au feu complémentaire interposé entre l'extrémité amont du mât d'accrochage et le capotage de raccord auquel est fixé le dispositif complémentaire, ce dernier comprenant une structure de contact en forme de joint à boudin, dont une extrémité longitudinale est équipée d'un pion de raccord coopérant avec l'autre extrémité longitudinale de la première lèvre de contact appartenant au dispositif de résistance au feu. Comme évoqué précédemment, cette particularité illustre le fait que l'invention présente une forme permettant l'assemblage du dispositif sur un autre dispositif existant, de conception différente et déjà en place sur l'ensemble propulseur.

D'autres avantages et caractéristiques de l'invention apparaîtront dans la description détaillée non limitative ci-dessous.

### BREVE DESCRIPTION DES DESSINS

Cette description sera faite au regard des dessins annexés parmi lesquels ;
[Fig. 1] est une vue partielle et schématique en perspective d'un ensemble propulseur selon un mode de réalisation préféré de l'invention ;
[Fig. 2] représente une vue éclatée en perspective d'une partie de l'ensemble propulseur montré sur la figure 1 ;
[Fig. 3] représente une vue en perspective de la partie montrée sur la figure précédente ;
[Fig. 4] est une vue de côté de celle montrée sur la figure précédente, avec le dispositif de résistance au feu représenté en pointillés ;
[Fig. 5] est une vue en coupe prise le long de la ligne V-V de la figure 4 ;
[Fig. 6a] est une vue en perspective du dispositif de résistance au feu montré sur les figures précédentes ;
[Fig. 6b] est une vue en perspective similaire à la précédente, selon un autre angle de vue ;

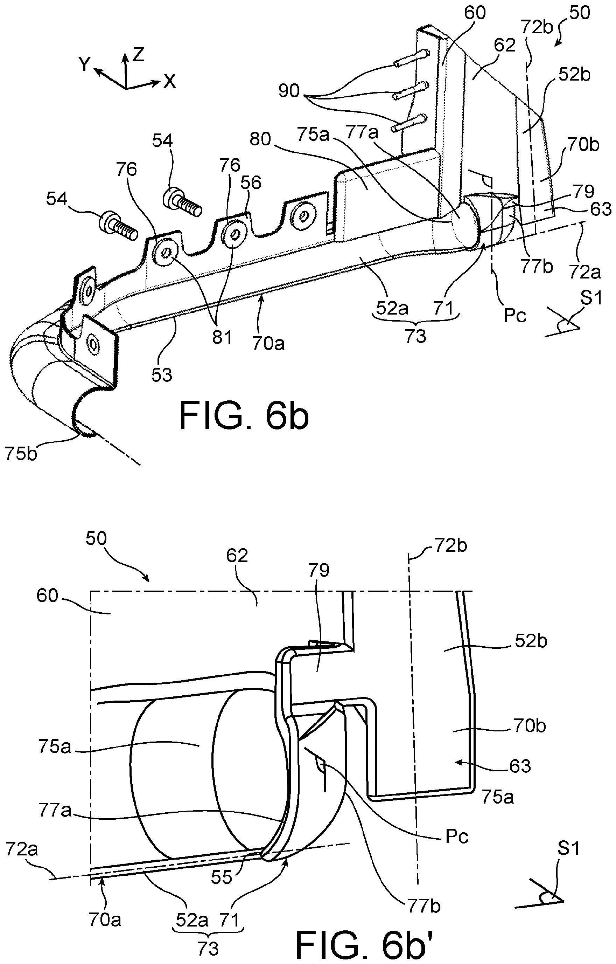

[Fig. 6b'] est une vue en perspective similaire à la précédente, selon une alternative de réalisation ;

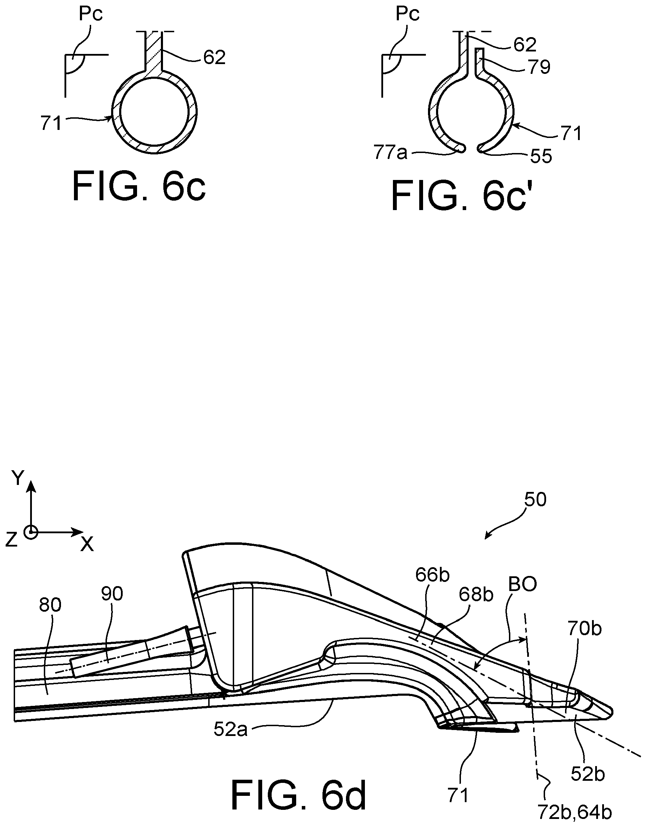

[Fig. 6c] est une vue en coupe prise selon le plan Pc de la figure 6b, traversant le tronçon d'extrémité ;
[Fig. 6c'] est une vue en coupe prise selon le plan Pc de la figure 6b', traversant le tronçon d'extrémité ;

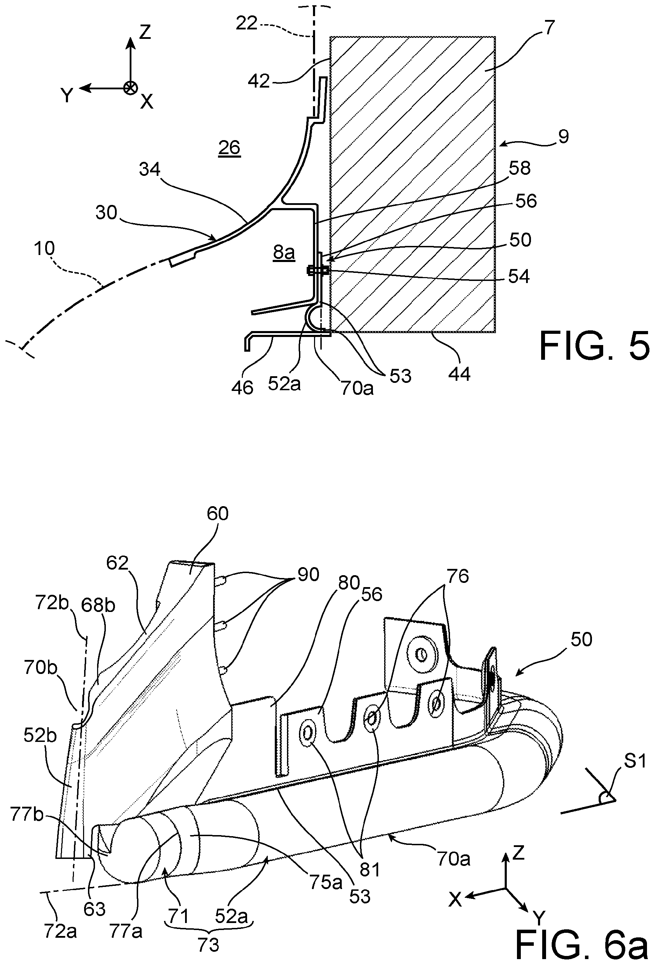

[Fig. 6d] est une vue de dessus d'une partie du dispositif de résistance au feu montré sur les figures 6a et 6b ;

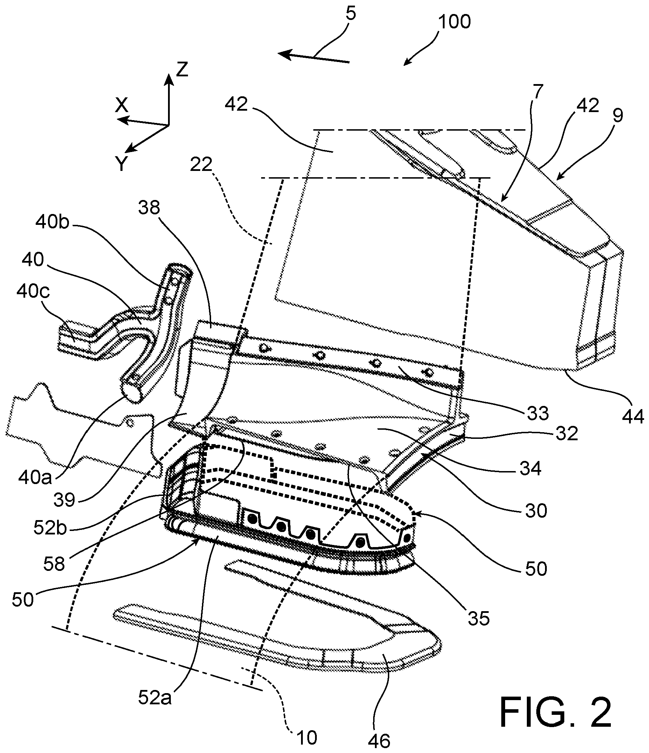

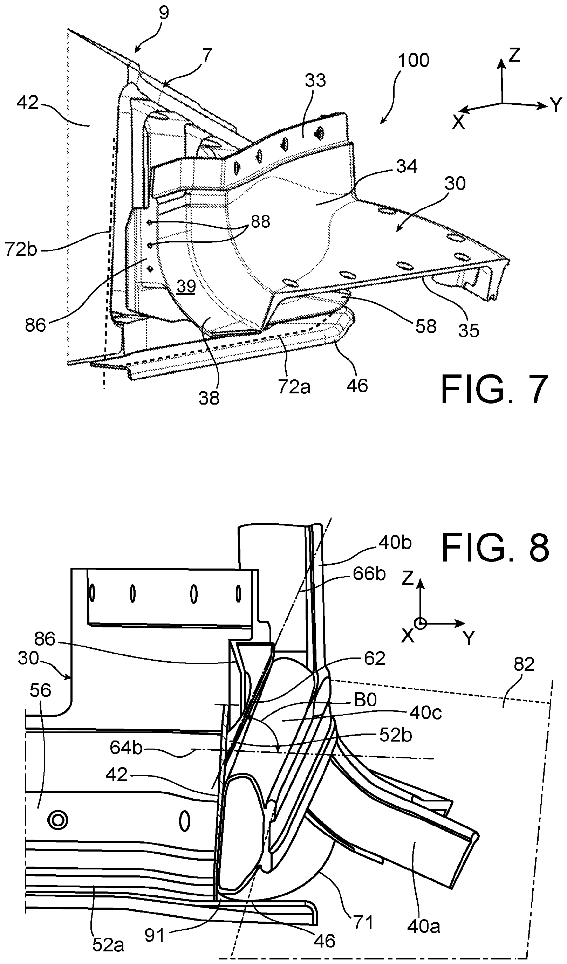

[Fig. 7] est une vue en perspective de la partie montrée sur les figures 2 à 4, schématisant la ligne d'étanchéité obtenue grâce au dispositif de résistance au feu ;
[Fig. 8] représente une vue en perspective de la partie montrée sur les figures 2 à 4, montrant en particulier la seconde lèvre de contact du dispositif de résistance au feu, à l'état contraint ;

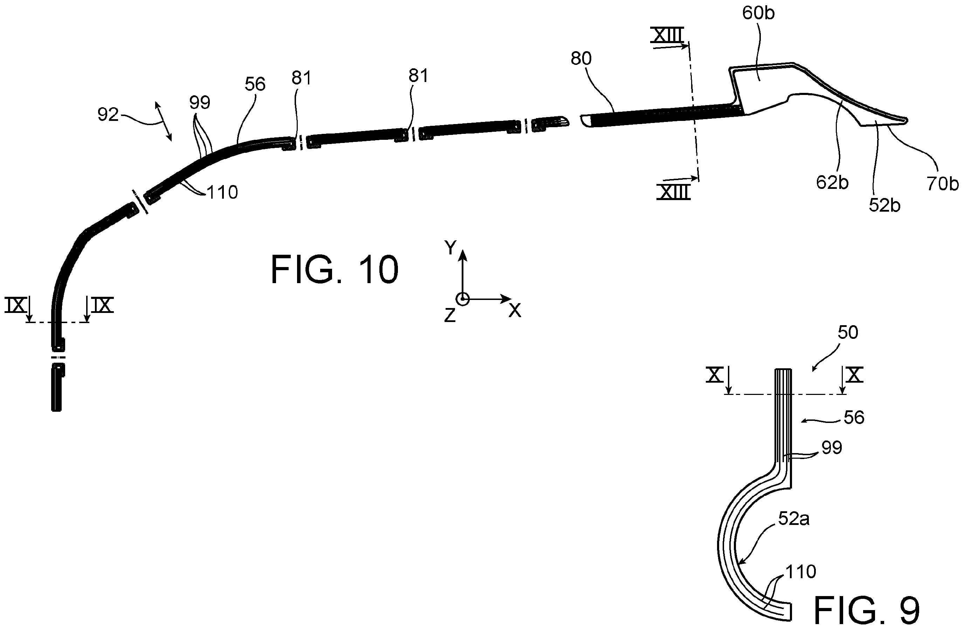

[Fig. 9] est une vue en coupe prise le long de la ligne IX-IX de la figure 10 ;
[Fig. 10] est une vue en coupe prise le long de la ligne X-X de la figure 9 ;

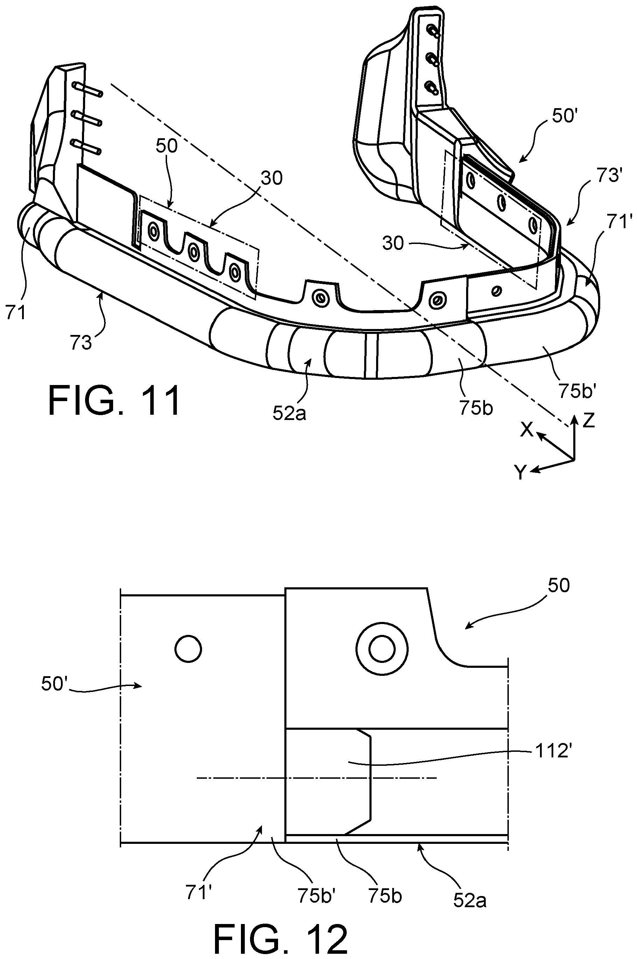

[Fig. 11] représente l'association entre un dispositif de résistance au feu tel que montré sur les figures précédentes, et un dispositif complémentaire conventionnel ;
[Fig. 12] est une vue arrière d'une partie de l'association de dispositifs montrée sur la figure 11 ;

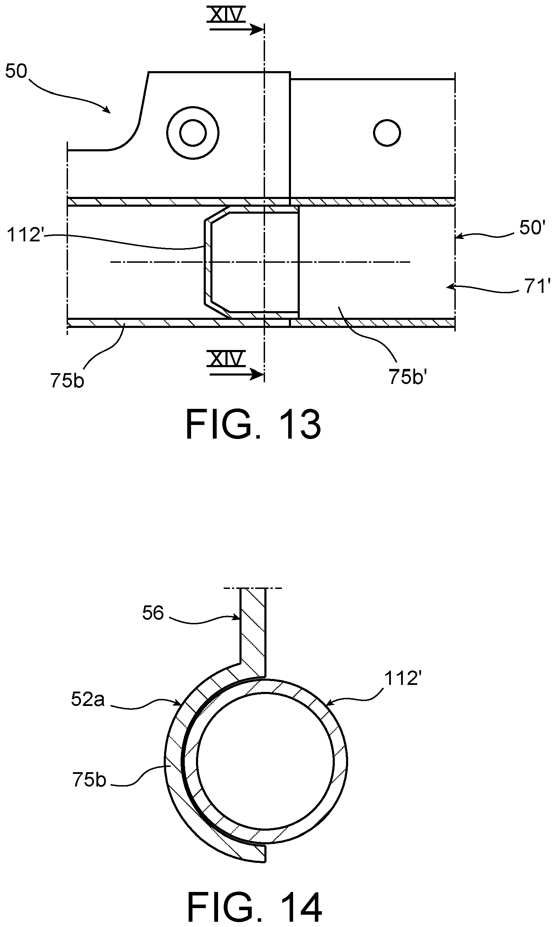

[Fig. 13] est une vue en coupe, similaire à la vue de la figure précédente ;
[Fig. 14] est une vue en coupe prise le long de la ligne XIV-XIV de la figure 13 ;

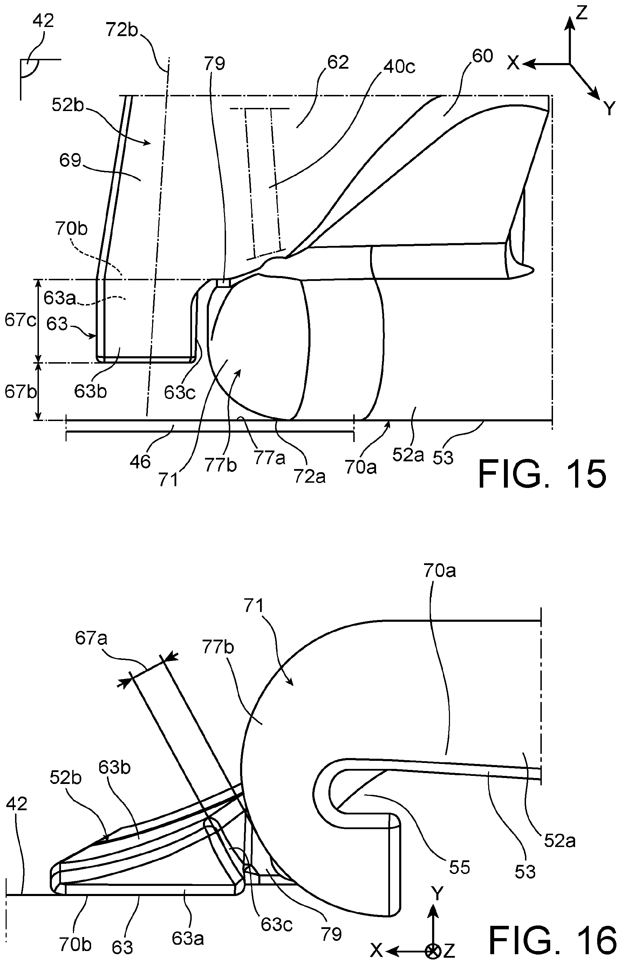

[Fig. 15] est une vue agrandie en perspective d'une partie du dispositif montré sur la figure 6a ;
[Fig. 16] est une vue de dessous de la partie du dispositif montrée sur la figure précédente ;

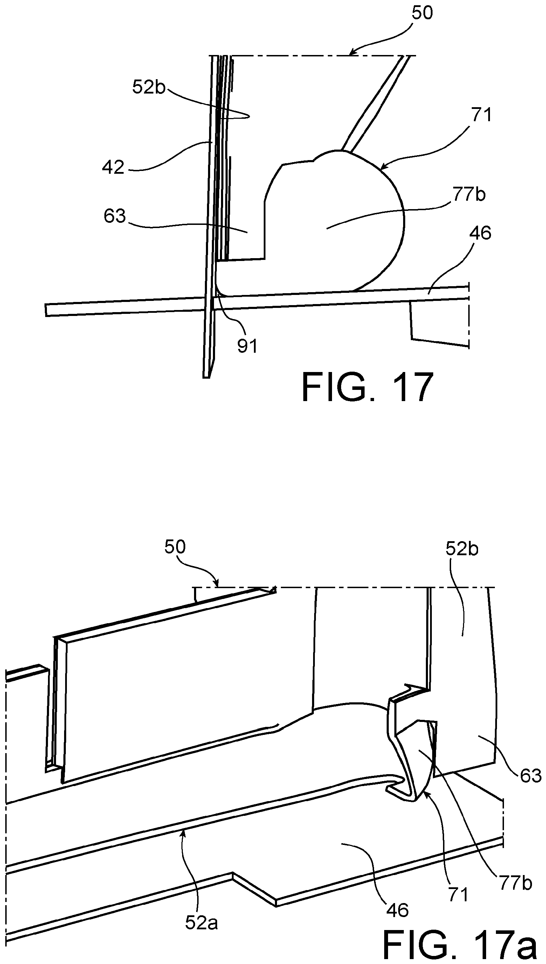

[Fig. 17] représente une vue axiale depuis l'aval, montrant en particulier la seconde lèvre de contact du dispositif de résistance au feu, à l'état de contrainte minimal ;
[Fig. 17a] représente une vue en perspective du dispositif soumis au même état de contrainte que celui de la figure 17 ;

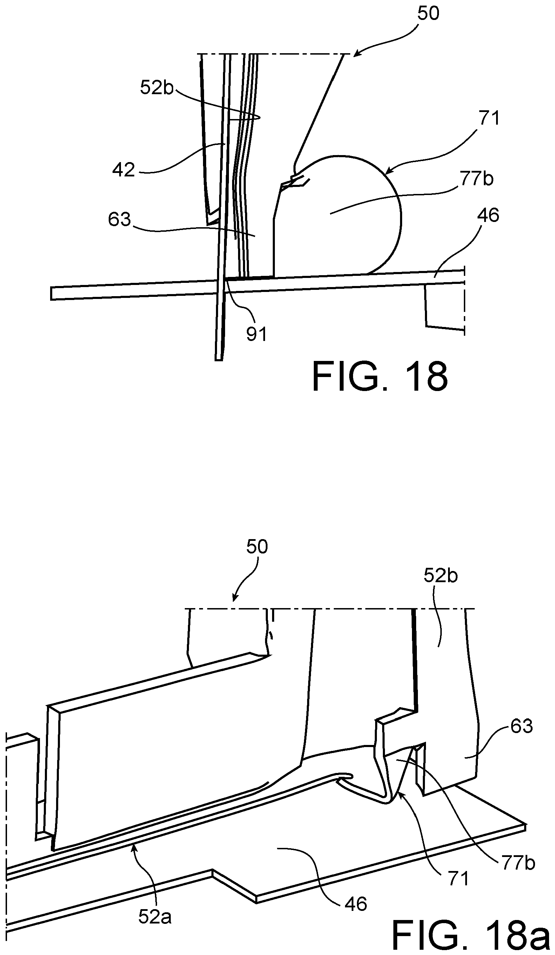

[Fig. 18] représente une vue axiale depuis l'aval similaire à celle de la figure 17, montrant en particulier la seconde lèvre de contact du dispositif de résistance au feu, à l'état de contrainte maximal ; et
[Fig. 18a] représente une vue en perspective du dispositif soumis au même état de contrainte que celui de la figure 18.

### EXPOSE DETAILLE DE MODES DE REALISATION PREFERES

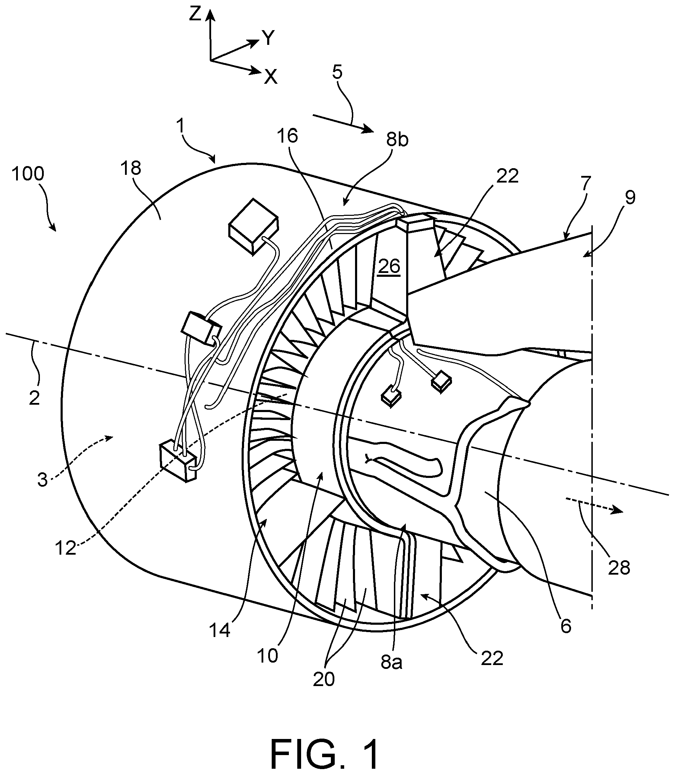

En référence tout d'abord à la figure 1, il est représenté partiellement un ensemble propulseur 100 selon un mode de réalisation préféré de l'invention. Cet ensemble 100 comporte une turbomachine 1 à double flux pour aéronef, ainsi qu'un mât d'accrochage 9 de cette turbomachine sur un élément de voilure de l'aéronef (non représenté).

L'ensemble propulseur 100 présente une direction longitudinale X, correspondant également à la direction longitudinale de la turbomachine 1 et à celle du mât 9. L'ensemble 100 présente également une direction transversale Y, ainsi qu'une direction verticale Z, correspondant à la direction de la hauteur. Les trois directions X, Y et Z sont orthogonales entre elles et forment un trièdre direct.

De préférence, le mât 9 permet de suspendre la turbomachine 1 sous une aile de l'aéronef. Ce mât comporte une partie structurale destinée à la reprise des efforts provenant de la turbomachine, cette partie étant habituellement dénommée structure primaire ou structure rigide. Elle adopte généralement la forme d'un caisson, dont seule une extrémité amont 7 est représentée sur la figure 1. Le mât est également équipé de structures secondaires (non représentées) sous forme de carénages aérodynamiques.

Dans le mode de réalisation préféré décrit et représenté, la turbomachine 1 est un turboréacteur à double flux, et à double corps. Le turboréacteur 1 présente un axe central longitudinal 2 parallèle à la direction X, et autour duquel s'étendent ses différents composants. Elle comprend, d'amont en aval selon une direction principale 5 d'écoulement des gaz à travers cette turbomachine, une soufflante 3 puis un générateur de gaz formé classiquement par des compresseurs, une chambre de combustion et des turbines. Ces éléments du générateur de gaz sont entourés par un carter central 6, également dénommé carter « core », qui délimite radialement vers l'intérieur un compartiment inter-veine 8a. Ce compartiment 8a est délimité par ailleurs radialement vers l'extérieur par un ou plusieurs capotages, dont un anneau amont 10 qui est le seul représenté sur la figure 1. L'anneau amont 10 est agencé dans la continuité aval d'un moyeu 12 d'un carter intermédiaire 14 du turboréacteur. Le carter intermédiaire 14 comporte également une virole extérieure 16 se situant dans la continuité aval d'un carter de soufflante 18. Il comporte aussi des aubes directrices de sortie 20, agencées en aval des aubes de soufflante et reliant le moyeu 12 à la virole extérieure 16.

Le carter de soufflante 18 et la virole extérieure 16 délimitent ensemble, radialement vers l'intérieur, un compartiment de soufflante 8b. Ce compartiment 8b est délimité par ailleurs radialement vers l'extérieur par un ou plusieurs capotages (non représentés), faisant partie d'une nacelle du turboréacteur. Tout comme le compartiment inter-veine 8a, ce compartiment 8b loge des équipements et des servitudes, comme cela est largement connu de l'art antérieur.

Un ou plusieurs bras 22 sont prévus pour relier les deux compartiments 8a, 8b. Ce sont par exemple deux bras 22 qui équipent le turboréacteur, respectivement agencés dans des positions horaires dites à 12h et à 6h. Ces bras 22 sont creux, et ils permettent par exemple de faire circuler des câbles électriques, et/ou des canalisations fluidiques. Plus précisément, ces bras relient une partie aval de la virole extérieure 16, à l'anneau amont 10. Pour ce faire, ils traversent une veine secondaire 26 du turboréacteur, cette veine étant en partie délimitée vers l'extérieur par la virole 16 ainsi que par des capotages (non représentés) disposés en aval de celle-ci, et en partie délimitée vers l'intérieur par l'anneau amont 10 du compartiment inter-veine 8a. La veine secondaire 26 s'ajoute à une veine primaire 28, qui transite de manière classique par le générateur de gaz.

En référence à présent aux figures 2 à 5, il est représenté une partie de l'ensemble propulseur 100 impliquant l'extrémité amont 7 du mât 9, le bras 22 situé en position horaire à 12h, ainsi que l'anneau amont 10. Plus précisément, de part et d'autre de l'extrémité amont 7 du mât 9, selon la direction Y, il est prévu deux capotages de raccord 30 assurant la jonction aérodynamique entre le bras 22 et l'anneau amont 10. Chaque capotage est agencé respectivement de part et d'autre du mât 9. Cet ensemble n'est ainsi pas complètement fermé sur 360°, mais il présente une ouverture angulaire centrée sur la position horaire à 12h, au niveau de laquelle les deux capotages de raccord 30 assurent la jonction avec l'extrémité radialement interne du bras 22.

Sur les figures, l'assemblage entre les différents éléments n'est représenté que pour un côté du mât, mais il est entendu qu'un assemblage identique ou similaire, de préférence symétrique, est prévu de l'autre côté de l'extrémité amont 7 du mât 9. Ainsi, de chaque côté du mât 9, le capotage de raccord 30 présente une extrémité amont 32 qui est destinée à se situer dans la continuité aval du moyeu de carter intermédiaire. Son extrémité haute 33 (selon une direction radialement externe) se raccorde à une paroi du bras 22, tandis que son extrémité circonférentielle 35 se raccorde à une extrémité circonférentielle de l'anneau amont 10. Enfin, son extrémité aval 38 forme un logement 39 du type secteur angulaire de gorge, logeant un joint de nacelle 40 qui est de préférence porté par un capot mobile de nacelle (non représenté sur les figures 2 à 5). Ce joint 40, également dénommé joint à trois branches ou joint tripode, comporte en effet un noeud à partir duquel s'étendent une première portion de joint 40a s'écrasant dans le logement 39 puis sur l'anneau amont 10, une seconde portion de joint 40b s'écrasant dans le logement 39 puis sur le bras 22, et une troisième portion de joint 40c s'écrasant sur une face latérale 42 du mât. Chaque branche du joint 40 est du type tubulaire, à boudin ou à bourrelet.

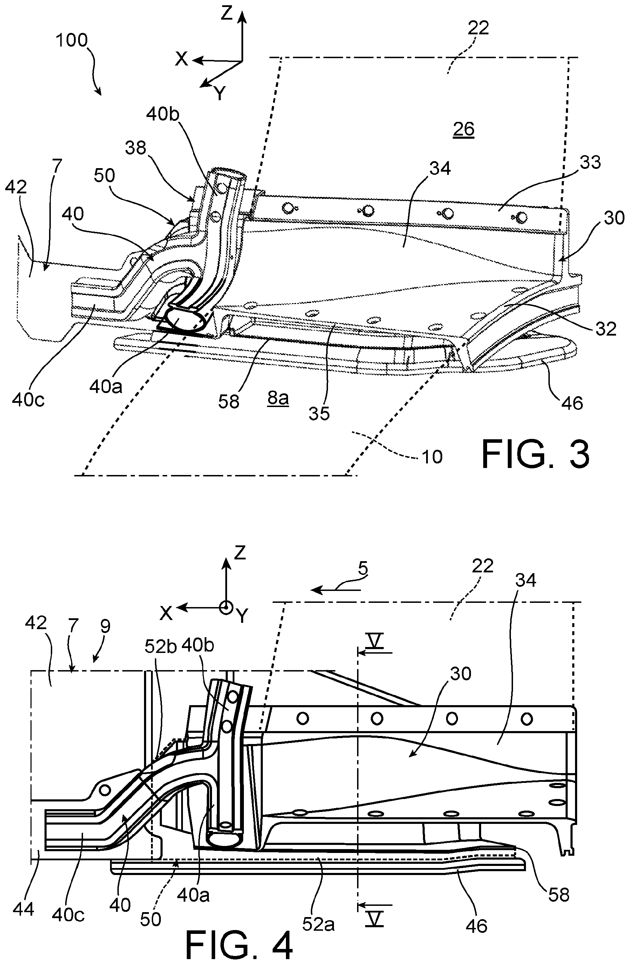

Le joint 40 adopte ainsi la position représentée sur la figure 3 après la fermeture du capot mobile de nacelle sur lequel il est implanté, capot qui présente alors une surface extérieure agencée dans la continuité aval d'une surface extérieure 34 du capotage de raccord 30.

L'extrémité amont 7 du mât 9 présente une base 44, à partir de laquelle s'étendent en particulier les deux faces latérales 42. La base 44 est solidaire d'une portée périphérique 46 en forme générale de U, suivant le contour de cette base 44. Elle est sensiblement plane, parallèle aux directions X et Y et sensiblement orthogonale aux faces latérales 42. Sa fonction réside essentiellement dans l'établissement d'une barrière anti-feu entre le compartiment inter-veine 8a, et l'extrémité amont 7 du mât. Pour satisfaire cette fonction, l'ensemble 100 comprend un dispositif de résistance au feu 50 propre à l'invention, associé à chaque capotage de raccord 30. Dans une forme alternative de réalisation de l'invention qui sera décrite ultérieurement, l'ensemble 100 comprend un dispositif de résistance au feu propre à l'invention et associé à l'un des deux capotages de raccord 30, ainsi qu'un dispositif de résistance au feu complémentaire plus conventionnel, associé à l'autre capotage de raccord 30.

Les deux capotages de raccord 30 peuvent présenter des conceptions identiques ou similaires, en étant par exemple conçus symétriquement par rapport à un plan longitudinal XZ passant par l'axe 2. Cette configuration est représentée schématiquement sur la figure 2, montrant également l'association des deux dispositifs 50 propres à l'invention qui se rejoignent au niveau de leur extrémité amont afin de définir conjointement un profil similaire à celui de la portée périphérique 46, contre laquelle ils s'écrasent.

En référence aux figures 2 à 5, il ne sera décrit que l'un des deux dispositifs 50, dont les conceptions sont identiques ou similaires, en étant par exemple conçus symétriquement par rapport au plan longitudinal XZ passant par l'axe 2.

Le dispositif de résistance au feu 50 est ainsi interposé entre l'extrémité amont 7 du mât, et son capotage de raccord associé 30 sur lequel est fixé ce même dispositif. D'une manière générale, le dispositif 50 présente une première lèvre de contact 52a ainsi qu'une seconde lèvre de contact 52b, la première lèvre 52a s'appuyant contre une surface radialement externe de la portée périphérique 46, sur une demi-portion de celle-ci. Cette première lèvre de contact 52a évite qu'un feu qui se déclare dans le compartiment inter-veine 8a se propage circonférentiellement vers la face latérale 42 du mât, ou radialement vers l'extérieur en direction d'une face d'extrémité amont de ce même mât.

La seconde lèvre de contact 52b s'appuie quant à elle sur la face latérale 42 du mât, en aval des deux portions 40a, 40b du joint de nacelle 40. Elle est conçue pour stopper l'éventuel feu dans le compartiment inter-veine 8a afin qu'il ne se propage pas axialement vers l'aval, le long de la face latérale 42 du mât.

Avec ses lèvres 52a, 52b, le dispositif 50 offre une solution astucieuse et performante pour conférer la fonction anti-feu, malgré les mouvements relatifs susceptibles d'être observés entre le turboréacteur et le mât, durant les différentes phases de vol de l'aéronef.

La figure 5 montre la première lèvre 52a avec un faible niveau de compression, résultant de la position relative entre le turboréacteur et le mât. Cette première lèvre 52a présente une section transversale en C, préférentiellement semi-circulaire, correspondant à sa forme nominale à l'état non-contraint. Ainsi, lorsque la première lèvre 52a est comprimée, elle présente une forme tendant à s'aplatir / s'ovaliser qui conduit ses deux extrémités circonférentielles 53 à se rapprocher l'une de l'autre, selon la direction de compression correspondant à la direction Z.

L'une des deux extrémités circonférentielles 53 est en appui contre la portée périphérique 46, en étant sensiblement tangente à cette portée. L'autre extrémité 53 est portée par une portion de fixation 56, traversée par des éléments de fixation 54 du type boulons ou rivets. Ces éléments 54 traversent en effet la portion de fixation 56 du dispositif 50, ainsi qu'un premier support 58 du capotage de raccord 30, situé radialement vers l'intérieur entre ce dernier et la portée périphérique 46. Le premier support 58 présente une forme générale de U ouvert latéralement vers l'extérieur, tandis que la première lèvre 52a semi-circulaire est ouverte latéralement vers l'intérieur.

Ainsi, la portion de fixation 56 s'étend selon la direction Z vers le bas parallèlement à la base du U 58, jusqu'à se raccorder à l'une des extrémités circonférentielles 53 de la première lèvre 52a semi-circulaire. La zone de raccordement souple entre la portion de fixation 56 et l'extrémité 53 se situe à proximité de la zone de raccordement entre la base du U et sa branche inférieure. Par conséquent, la partie supérieure de la première lèvre 52a est préférentiellement en appui contre la branche inférieure du premier support 58 en forme de U.

En outre, en coupe transversale telle que celle de la figure 5, les deux extrémités circonférentielles 53 de la première lèvre 52a s'inscrivent préférentiellement sur une ligne fictive verticale le long de laquelle s'étend la portion de fixation 56. Cette géométrie est en particulier observée à l'état non-contraint de la première lèvre 52a. Néanmoins, il est précisé que la conception du dispositif de résistance au feu 50 permet de conserver le contact entre la première lèvre 52a et la portée périphérique 46, quels que soient les mouvements relatifs observés entre le turboréacteur et le mât, et ce dans chacune des trois directions X, Y et Z.

L'extrémité circonférentielle 53 coopérant avec la portée 46 définit la majeure partie d'une première extrémité de contact 70a du dispositif 50 avec le mât. Cette première extrémité de contact 70a est complétée par une faible partie provenant d'un tronçon d'extrémité 71 référencé sur les figures 6a à 6d. Dans ce mode de réalisation, le tronçon d'extrémité 71 est un tronçon à boudin, c'est-à-dire un tronçon tubulaire, préférentiellement de section transversale circulaire dont le creux reste préférentiellement vide. Ce tronçon 71 forme avec la première lèvre 52a une structure de contact 73 destinée à s'appuyer sur la portée périphérique 46 du mât.

Le tronçon 71 est agencé dans la continuité de l'extrémité longitudinale aval 75a de la première lèvre 52a. Plus précisément, le tronçon à boudin circulaire 71 présente une extrémité amont 77a qui est ouverte, et qui se trouve dans la continuité de l'extrémité longitudinale aval 75a de la lèvre 52a. Par conséquent, au niveau de la transition entre la lèvre 52a et le tronçon 71 opérée par les extrémités 75a, 77a, la structure de contact 73 passe d'une section circulaire à une section semi-circulaire, éventuellement de manière progressive, mais préférentiellement de manière abrupte. De manière plus générale, quelle que soit la forme de la lèvre 52a et celle du tronçon 71, la structure de contact 73 passe d'une section fermée (au sein du tronçon 71), à la moitié de cette section fermée (au sein de la lèvre 52a en forme de C).

Les diamètres extérieurs et intérieurs des deux extrémités 75a, 77a sont respectivement sensiblement identiques. Ces diamètres sont d'ailleurs sensiblement constants tout le long de la structure de contact 73, même si des variations mineures peuvent être observées, par exemple dans une plage de plus ou moins 15%.

L'extrémité aval 77b du tronçon 71 est obturée. Elle est bombée, par exemple sous forme de dôme. Grâce à cette obturation ainsi qu'à la forme tubulaire du tronçon 71, cette partie aval de la structure de contact 73 assure une étanchéité renforcée et plus aisée à obtenir, en raison d'une plus grande étendue transversale que celle de la première lèvre en C 52a prolongée par ce tronçon. Cela permet en particulier à cette portion 71 de contacter à la fois la portée périphérique 46, et la face latérale 42 du mât 9.

Comme évoqué précédemment, le tronçon à boudin circulaire 71 ne constitue qu'une faible partie de la structure de contact 73, à savoir seulement son extrémité aval. De préférence, sa longueur ne représente pas plus de 20% de la longueur totale de la structure de contact 73, et encore plus préférentiellement, représente un pourcentage inférieur à 15%. A cet égard, les figures 6b' et 6c' représentent une alternative de réalisation, dans laquelle la portion d'extrémité 71 ne s'étend que sur une faible longueur. Cette portion 71 ne présente plus nécessairement une section à boudin, mais elle peut être réduite à une forme générale de dôme ouverte au niveau de son extrémité amont 77a se raccordant à la première lèvre 52a, et obturée au niveau de son extrémité aval 77b. En d'autres termes, cette portion 71 est réduite à l'extrémité obturée en forme de dôme de la portion 71 du mode montré sur les figures 6a à 6d. Comme cela est le mieux visible sur la figure 6c', l'extrémité radialement inférieure du tronçon 71 en forme de dôme peut présenter une encoche 55 débouchant au niveau de l'extrémité amont 77a. Cette encoche 55 permet une déformation davantage contrôlée du tronçon 71, en compression durant le fonctionnement de l'ensemble propulseur.

Quel que soit le mode envisagé, comme pour la lèvre 52a, la forme circulaire / de dôme du tronçon 71 correspond à sa forme nominale, observée à l'état non-contraint. Ainsi, une fois agencé sur l'ensemble propulseur, ce tronçon 71 est lui aussi sujet à un aplatissement / une ovalisation résultant des mouvements relatifs entre le turboréacteur et le mât, et ce dans chacune des trois directions X, Y et Z. D'autres types de déformation peuvent néanmoins être observés sur ce tronçon essentiellement sollicité en compression, sans sortir du cadre de l'invention.

Ensemble, la première lèvre de contact 52a et l'extrémité radialement inférieure du tronçon 71 permettent d'établir une première ligne d'étanchéité sur la portée périphérique 46. Comme cela est représenté sur la figure 7, il s'agit d'une première ligne courbe 72a, suivant le profil de la demi-portion de portée 46 associée à la structure de contact. La première extrémité de contact 70a de cette structure de contact 70 (non représentée sur la figure 7 mais visible sur les figures 6a et 6b), s'étend le long de cette première ligne courbe 72a, en forme générale de L.

Le dispositif 50 intègre également la seconde lèvre précitée, dont la fonction est d'établir une seconde ligne d'étanchéité 72b sur la face latérale 42 du mât 9. Cette seconde ligne est préférentiellement droite, sensiblement parallèle à la direction Z. De préférence, les deux lignes 72a, 72b montrées sur la figure 7 se rejoignent au niveau d'une extrémité aval radialement interne du dispositif 50. Si la structure de contact et la seconde lèvre peuvent être directement contigües au niveau du tronçon d'extrémité, elles peuvent alternativement être reliées par un raccord de matière 79 visible sur les figures 6b, 6b', reliant l'extrémité aval obturée 77b du tronçon 71 à la seconde lèvre de contact 52b.

De nouveau en référence aux figures 6a à 6d, 6b' et 6c', le dispositif 50 va être décrit de manière plus détaillée. Sur ces figures, il est tout d'abord représenté la première ligne courbe 72a, le long de laquelle se succèdent la première lèvre 52a et le tronçon d'extrémité 71. La ligne 72a s'inscrit dans une première surface de contact S1 sensiblement plane, qui correspond à la surface radialement externe de la portée périphérique 46. Cette surface S1 peut être strictement plane, ou présenter un ou plusieurs niveaux de très faible hauteur, par exemple ne dépassant pas quelques millimètres. La surface S1 correspond ainsi préférentiellement à un plan XY de l'ensemble propulseur 100. En outre, la première ligne courbe 72a qui s'inscrit dans ce plan XY présente bien une forme générale de L, dont l'angle entre la base du L et la branche du L peut être arrondi, et dont l'extrémité libre de la branche peut également être arrondie.

La portion de fixation 56 s'étend vers le haut selon la direction Z à partir de la lèvre 52a, sous la forme d'une lamelle percée de trous de passage 76 destinés à être traversés par les boulons 54 précités. Les trous de passage 76 peuvent être renforcés par des inserts 81 rapportés ultérieurement sur le dispositif 50.

Au niveau de l'extrémité longitudinale aval 75a de la première lèvre 52a, ou en amont de celle-ci, le dispositif 50 comporte une portion de support 60 qui s'étend également vers le haut sensiblement selon la direction Z, à partir de l'extrémité circonférentielle supérieure 53 de cette lèvre. Plus précisément, cette portion de support 60 présente une épaisseur supérieure, et elle se trouve adjacente à une nervure 80 prévue pour renforcer la tenue mécanique du dispositif 50. La nervure 80 est interposée entre la portion de fixation 56, et la portion de support 60 en forme de bloc. Elle s'étend également vers le haut sensiblement selon la direction Z, parallèlement à la portion de fixation 56 de laquelle elle peut être écartée, selon la direction de la première ligne courbe 72a. La nervure 80 présente une épaisseur intermédiaire entre celle de la portion de fixation 56, et celle de la portion de support 60. Il en est de même pour sa hauteur selon la direction Z.

La portion de support 60 a pour fonction de porter la seconde lèvre 52b, via une zone de jonction 62 interposée entre elles. La zone de jonction 62 présente une épaisseur réduite, et sert d'articulation à la seconde lèvre 52b qui reste préférentiellement droite et pas ou peu déformée en flexion, quel que soit le niveau de compression subi.

La zone de jonction 62 s'étend à partir de la portion de support 60 sensiblement selon la direction X, vers l'aval. A son extrémité radialement intérieure, la zone de jonction 62 porte la partie supérieure du tronçon 71, qui se situe en amont de la lèvre 52b portée par l'extrémité aval de cette même zone de jonction 62.

La seconde extrémité de contact 70b de la seconde lèvre 52b s'étend selon la seconde ligne 72b préférentiellement droite, et de préférence sensiblement orthogonale à la première surface de contact S1. Ainsi, la seconde ligne droite 72b s'étend de préférence sensiblement selon la direction Z, afin que la lèvre 52b contacte la face latérale associée du mât.

L'extrémité radiale externe de l'ensemble formé par les éléments 60, 62 et 52b est biseautée, comme cela s'aperçoit le mieux sur la figure 6b.

De plus, la seconde lèvre de contact 52b présente une épaisseur grandissante en allant de sa base 68b référencée sur la figure 6a, vers la seconde extrémité de contact 70b. Par conséquent, cette dernière peut présenter un caractère surfacique, par exemple sous forme de bande verticale plane. A l'état non-contraint représenté sur cette figure 6d, un angle d'inclinaison B0 peut être observé entre une normale 64b à la face latérale de mât (non représentée), et une seconde direction générale de lèvre 66b définie entre la base 68b, et la seconde extrémité de contact 70b de la lèvre 52b.

A l'état assemblé du dispositif 50, sa seconde lèvre de contact 52b est sollicitée selon la direction Y par la troisième portion 40c du joint de nacelle. En référence à la figure 8, lorsque le capot de nacelle 82 (représenté uniquement schématique) est fermé, la troisième branche 40c du joint 40 solidaire de ce capot vient appuyer sur la seconde lèvre 52b. Celle-ci est alors contrainte entre la face latérale 42 du mât et la troisième portion 40c du joint 40, impliquant un pivotement de la lèvre 52b selon sa zone de jonction 62. Du fait de ce pivotement, l'angle B0 augmente par rapport à celui observé à l'état non-contraint de la figure 6d. La valeur de cet angle B0 dépend du niveau de compression du dispositif de résistance au feu 50, qui lui-même dépend de l'amplitude des mouvements relatifs entre le turboréacteur et le mât. La figure 8 montre également que la troisième portion 40c du joint 40 est contrainte selon la direction Y, impliquant que sa partie tubulaire d'étanchéité est déformée entre le capot de nacelle 82 et la lèvre 52b. Ainsi, la partie tubulaire qui présente une section de forme sensiblement circulaire à l'état non-contraint, s'aplatit sous la contrainte, en adoptant une forme par exemple elliptique, ovale ou similaire.

Cette figure 8 montre également que la présence du tronçon 71 limite fortement la section de fuite 91 entre la face latérale 42 du mât et ce même tronçon, même à des niveaux de déformation importants conduisant à des valeurs élevées pour l'angle B0. Le fait de prévoir une telle extrémité aval, de forme bombée vers l'aval et ouvert vers l'amont, participe à la facile obtention d'une étanchéité satisfaisante et maîtrisée avec la face latérale 42 du mât. La section de fuite 91 reste ainsi raisonnable, même lors d'un pivotement important de la seconde lèvre 52b. Cette section 91 est d'ailleurs restreinte par la forme particulière de la seconde lèvre 52b, qui sera décrite ultérieurement en référence aux figures 6a, 6b, 6b', 6c', 15 et 16.

Toujours en référence à la figure 8, il est montré que la portion de support 60 du dispositif 50 est reçue dans un second support 86, prévu sur le capotage de raccord 30, au niveau de son extrémité aval 38 formant le logement de joint 39 visible sur la figure 2. Le second support 86, qui est le mieux visible sur la figure 7, présente des trous 88 destinés à recevoir les éléments allongés de fixation 90 portés par la portion de support 60, du côté apposé à celui où se trouve la lèvre 52b et sa zone de jonction 62. Ces éléments allongés 90, sont réalisés d'une seule pièce avec le dispositif 50, ou rapportés sur ce dernier. Ils sont par exemple formés par des tiges dont l'extrémité est destinée à être écrasée sur la surface opposée du second support 86 qu'elles traversent.

Une autre particularité de l'invention réside dans la fabrication monobloc du dispositif de résistance au feu 50. En d'autres termes, tous les éléments précités du dispositif 50 sont réalisés d'une seule pièce, de préférence par moulage par compression. Cette fabrication monobloc n'est d'ailleurs pas remise en cause par la présence du tronçon à boudin, puisque celui-ci reste ouvert à l'une de ses extrémités axiales, et ne s'étend préférentiellement que sur une très faible longueur.

Sont éventuellement intégrés à cette pièce d'un seul tenant les éléments allongés de fixation 90, tandis que les inserts 81 sont considérés comme des éléments rapportés extérieurs au dispositif, car faisant partie de ses moyens de fixation sur le capotage de raccord 30.

Pour la fabrication du dispositif 50, il peut s'agir d'un simple bloc élastomère, mais ce dernier est préférentiellement combiné à une ou plusieurs couches de fonctionnalités diverses.

Dans l'exemple représenté sur les figures 9 et 10, le dispositif 50 est formé par la superposition, dans la direction de l'épaisseur 92 de ce dernier, de couches en matériau élastomère 99 et de préférence en matériau élastomère silicone, et de couches fonctionnelles fibreuses 110. Parmi ces dernières, il peut s'agir de couches de toile de verre, céramique ou meta-aramide (poly(m-phénylèneisophtalamide)), qui renforcent la rigidité du dispositif. Ensuite, il peut être prévu des couches spécifiques de résistance au feu, par exemple réalisées en fibre céramique. De préférence, celles-ci sont agencées dans les zones du dispositif les plus exposées à la flamme. Le matériau élastomère silicone des couches 99 se dégradant et se transformant en silice en cas de chaleur importante, les toiles utilisées 110 permettent, grâce à leur maillage, de retenir ces particules dégradées.

L'alternance de couches peut en outre être complétée par des couches fibreuses de meta-aramide 110, toujours pour renforcer la rigidité de l'ensemble. L'une de ces couches peut même être revêtue sur la surface extérieure des lèvres, afin de limiter leur usure et leur endommagement par les parties en contact.

Les couches 99 et 110 sont préférentiellement parallèles entre elles, en suivant le profil du dispositif 50. Au moins une ou plusieurs d'entre elles peuvent s'étendre sur toute la hauteur du dispositif 50, et d'une extrémité à l'autre de ce dernier dans la direction de la première ligne courbe précitée 72a.

Selon la direction X, le dispositif 50 peut présenter une longueur comprise entre 30 et 50 cm, tandis que selon la direction Y, la largeur de ce dispositif est de l'ordre de 10 à 20 cm. Enfin, selon la direction Z, la hauteur maximale du dispositif 50 peut être de l'ordre de 15 à 20 cm. Chaque lèvre 52a, 52b ne s'étend que sur quelques centimètres.

Pour ce qui concerne la résistance au feu procurée par le dispositif 50, en plus de se conformer aux exigences normatives ISO 2685-1998 et AC 20-135, les conditions les plus pénalisantes sont considérées, à savoir qu'il est recherché une tenue au feu en vol et une tenue au feu au sol. Cela implique notamment de concevoir une solution assurant la fonction anti-feu dans les conditions suivantes :
- température de flamme : 1100 ± 80°C ;
- vibration: ± 0,4 mm sous une fréquence de 50 Hz;
- pression : 0,4 bar pendant les 5 premières minutes du test feu ;
- durée du test : 15 min, décomposée en 2 phases : 5 min : Surpression appliquée; et 10 min : Pression atmosphérique ;
- auto-extinction dans un temps limité. Dans les réalisations décrites ci-dessus, ce sont deux dispositifs 50 propres à l'invention qui sont associés à la portée circonférentielle 46. Une jonction entre les deux se révèle particulièrement aisée au niveau des extrémités longitudinales amont 75b de leurs premières lèvres 52a respectives. En effet, ces deux extrémités 75b en forme de C (dont l'une est visible sur la figure 6b) peuvent aisément se chevaucher, et offrir ainsi une continuité pour la barrière de résistance au feu au niveau de la zone de jonction entre les deux dispositifs 50.

Mais l'invention s'avère également propice à une implantation sur un ensemble propulseur existant, pour remplacer seulement l'un des deux dispositifs conventionnels déjà en place sur cet ensemble. Cette fonctionnalité est représentée sur les figures 11 à 14, montrant l'association entre un dispositif 50 selon l'invention, et un dispositif de résistance au feu complémentaire 50' de conception conventionnelle. Les deux dispositifs sont respectivement destinés à être fixés sur les deux capotages de raccord 30 de l'ensemble propulseur.

Le dispositif de résistance au feu complémentaire 50' présente une conception classique, à plusieurs éléments rapportés les uns sur les autres. Il comporte globalement un joint à boudin 71' s'étendant sur sensiblement toute la longueur du dispositif 50', ce joint étant destiné à être plaqué contre la portée périphérique du mât, à la manière de la structure de contact 73 du dispositif 50. A l'état non-contraint tel que représenté sur les figures 11 à 14, le joint à boudin 71' présente une section de forme circulaire.

Ce joint à boudin 71' constitue ainsi la structure de contact 73' du dispositif complémentaire 50', et présente une extrémité longitudinale amont 75b' équipée d'un pion de raccord 112'. Ce pion 112' est creux, également de section circulaire de diamètre plus faible que celui du boudin, et éventuellement chanfreiné au niveau de sa partie terminale obturée. Pour ce qui concerne le dispositif 50, l'extrémité longitudinale amont 75b de sa première lèvre de contact 52a, de section en forme de C, se révèle parfaitement adaptée pour coopérer ce pion de raccord 112'. En effet, le diamètre intérieur du C peut être sensiblement égal au diamètre extérieur du pion de raccord 112', permettant à ce dernier d'être logé à l'intérieur de l'extrémité longitudinale amont 75b en forme de C. Ce recouvrement, visible sur les figures 12 à 14 et assimilable à un emboîtement, permet d'assurer la continuité de la barrière de résistance au feu au niveau de la jonction entre le nouveau dispositif 50, et le dispositif complémentaire 50' déjà installé sur l'ensemble propulseur. Le remplacement d'un seul des deux dispositifs existants est ainsi facilité par la conception de l'invention proposée.

En référence à présent aux figures 6a, 6b, 6b', 6c', 15 et 16, il va être décrit la conception particulière de la seconde lèvre 52b. Celle-ci ne se termine pas au niveau du ligament de matière 79, mais elle comporte à son extrémité radialement intérieure une portion d'obstruction 63 en saillie selon la seconde ligne 72b. Cette portion en saillie 63 prolonge ainsi la lèvre 52b au-delà du ligament de matière 79, en direction de la première ligne 72a. Ainsi, elle se trouve agencée en regard et à distance de l'extrémité aval obturée 77b de la portion d'extrémité 71. En d'autres termes, elle fait face à l'extrémité aval obturée 77b dans la direction de la première ligne 72a, en faisant obstacle à une flamme qui se propagerait axialement vers l'amont en direction de cette extrémité aval bombée 77b.

En référence plus spécifiquement aux figures 15 et 16, il est noté que cette portion d'obstruction 63, en forme de protubérance, présente une géométrie qui s'inscrit dans la continuité de celle du reste de la lèvre 52b. Elle présente par conséquent une première face de contact 63a formant la partie inférieure de la seconde extrémité de contact 70b, de géométrie sensiblement plane afin de s'écraser contre la face latérale du mât. Opposée à la première face, la portion en saillie 63 présente une seconde face 63b dont la forme est telle qu'elle permet de dévier la flamme afin de l'écarter transversalement de la face latérale du mât, et éviter sa pénétration dans la zone sensible. Pour ce faire, la seconde face 63b s'éloigne de la première face de contact 63a au fur et à mesure qu'elle se rapproche de l'extrémité obturée 77b, cette dernière étant bombée en direction de la portion d'obstruction en saillie 63. Elle adopte ainsi une forme courbe, par exemple à simple courbure pour définir une rampe de déviation transversale de flamme.

La seconde face 63b se situe elle aussi dans le prolongement et dans la continuité d'une surface extérieure de la partie supérieure de la seconde lèvre 52b, cette surface étant référencée 69 sur la figure 15. La surface extérieure 69, elle aussi de forme courbe, est destinée à être recouverte par la troisième portion de joint de nacelle 40c. En revanche, en fonctionnement, cette portion de joint de nacelle 40c n'est pas destinée à recouvrir la portion en saillie 63 de la seconde lèvre 52b, puisque cette portion en saillie 63 s'étend radialement plus bas que la portion de joint 40c. A cet égard, si l'invention prévoit que la portion d'obstruction 63 soit en saillie vers le bas selon la seconde ligne 72b, sa longueur en saillie reste préférentiellement limitée afin qu'elle se termine en retrait par rapport à la première extrémité de contact 70a, donc en retrait selon la direction Z. Cela limite les risques que cette portion d'obstruction 63, au contact de la face latérale du mât, entre également en contact avec la portée périphérique 46 contre laquelle appuie la première extrémité de contact 70a. Le jeu 67b entre l'extrémité basse de la portion d'obstruction 63 et la portée 46, selon la direction de la seconde ligne 72b, peut être compris entre 8 et 13 mm, et par exemple de l'ordre de 11 mm. La distance en saillie 67c de la portion d'obstruction 63 peut quant à elle être compris entre 10 et 20 mm, par exemple de l'ordre de 16 mm. Ainsi, la portion d'obstruction 63 se termine préférentiellement au-delà d'un centre de l'extrémité obturée bombée 77b, dans la direction de la seconde ligne 72b.

Les deux faces 63a, 63b sont reliées en amont à une troisième face de raccord 63c de la portion d'obstruction 63, définissant un jeu axial 67a avec l'extrémité obturée 77b. Ce jeu 67a, référencé sur la figure 16, peut être compris entre 2 et 5 mm, en étant par exemple de l'ordre de 3,5 mm. Sur cette même figure, il est montré que la seconde face 63b, le jeu 67a et l'extrémité obturée 77b définissent ensemble une chicane. Celle-ci réduit considérablement le risque que la flamme l'emprunte jusqu'à se propager à travers l'éventuelle section de fuite mentionnée ci-dessus, émanant de la déformation de l'extrémité obturée 77b de la structure de contact.

En référence à présent aux figures 17, 17a, 18 et 18a, il est montré le dispositif 50 dans différents états de contraintes contre la portée périphérique 46. Les figures 17 et 17a montrent un état de contrainte minimal, dans lequel la section de fuite 91 entre la face latérale 42 du mât et l'extrémité obturée 77b du tronçon 71, au niveau de la portée 46, est minimal. Dans cet état, la portion d'obstruction 63 de la lèvre 52b peut ne pas être suffisamment basse pour former un obstacle axial à la flamme se dirigeant vers la section de fuite 91 adjacente à la portée 46. Cependant, cela reste sans conséquence néfaste, puisque la très faible section 91 observée à ce niveau de contrainte réduit les risques de pénétration de la flamme dans la zone sensible du mât. De plus, même à ce faible niveau de contrainte, la portion d'obstruction 63 peut former un obstacle axial à la flamme se dirigeant vers toute autre section de fuite qui pourrait se produire le long de la face 42 du mât, à distance de la portée 46, et résultant toujours de la déformation de l'extrémité obturée 77b.

Les figures 18 et 18a montrent un état de contrainte maximal, dans lequel le recouvrement de l'extrémité obturée 77b par la portion d'obstruction 63 est optimal. Toute section de fuite (non visible) entre la face latérale 42 du mât et l'extrémité déformée 77b du tronçon 71 est donc protégée de la flamme par la portion d'obstruction 63, agencée axialement en regard de ce tronçon.

Bien entendu, diverses modifications peuvent être apportées par l'homme du métier à l'invention qui vient d'être décrite, uniquement à titre d'exemples non limitatifs et dont la portée est définie par les revendications annexées.

## Revendications

1. Dispositif de résistance au feu (50) destiné à être interposé entre une extrémité amont (7) d'un mât d'accrochage (9) d'une turbomachine d'aéronef à double flux (1), et un capotage de raccord (30) équipant cette turbomachine, ledit capotage de raccord étant destiné à raccorder un anneau amont (10) délimitant radialement vers l'extérieur une partie d'un compartiment inter-veine (8a), à un bras (22) traversant radialement une veine secondaire (26) de la turbomachine, **caractérisé en ce que** le dispositif comprend :
- une structure de contact (73) comprenant une première lèvre de contact (52a), présentant de préférence une section en C, et définissant une première extrémité de contact (70a) s'étendant le long d'une première ligne (72a), de préférence une ligne courbe, la structure de contact comprenant également, à l'une des extrémités longitudinales (75a) de la première lèvre de contact (52a), un tronçon d'extrémité (71) dont l'une des extrémités (77a) est ouverte et se trouve dans la continuité de la première lèvre (52a), et dont l'autre extrémité (77b) est obturée ;
- une portion de support (60) ; et
- une seconde lèvre de contact (52b) portée par la portion de support (60) via une zone de jonction (62) qui porte le tronçon d'extrémité (71) de la structure de contact (73), la seconde lèvre de contact (52b) présentant une seconde extrémité de contact (70b) s'étendant le long d'une seconde ligne (72b) distincte de la première ligne (72a), la seconde lèvre de contact (52b) présentant à l'une de ses extrémités une portion d'obstruction (63) en saillie selon la seconde ligne (72b), la portion d'obstruction (63) étant située à distance et en regard de l'extrémité obturée (77b) du tronçon d'extrémité (71).

2. Dispositif selon la revendication 1, **caractérisé en ce que** la portion d'obstruction (63) présente une première face de contact (63a) formant une partie de la seconde extrémité de contact (70b) de la seconde lèvre de contact (52b), ainsi qu'une seconde face (63b) opposée à la première et s'éloignant de la première face de contact (63a) en se rapprochant de l'extrémité obturée (77b) du tronçon d'extrémité (71), la seconde face (63b) étant préférentiellement courbe.

3. Dispositif selon la revendication 1 ou la revendication 2, **caractérisé en ce que** l'extrémité obturée (77b) du tronçon d'extrémité (71) présente une forme bombée en direction de la portion d'obstruction (63) appartenant à la seconde lèvre de contact (52b).

4. Dispositif selon l'une quelconque des revendications précédentes, **caractérisé en ce que** dans la direction de la seconde ligne (72b), la portion d'obstruction (63) se termine en retrait par rapport à la première extrémité de contact (70a).

5. Dispositif selon l'une quelconque des revendications précédentes, **caractérisé en ce qu'**il est monobloc.

6. Dispositif selon l'une quelconque des revendications précédentes, **caractérisé en ce que** ladite seconde ligne (72b) est droite, et de préférence sensiblement orthogonale à une première surface de contact (S1) sensiblement plane dans laquelle s'inscrit la première ligne courbe (72a).

7. Dispositif selon l'une quelconque des revendications précédentes, **caractérisé en ce qu'**il comprend également une portion de fixation (56) portant la première lèvre de contact (52a), ladite portion de fixation étant préférentiellement traversée par des trous de passage (76) d'éléments de fixation (54).

8. Ensemble propulseur (100) pour aéronef comprenant une turbomachine d'aéronef (1) à double flux, ainsi qu'un mât d'accrochage (9) de la turbomachine destiné à sa fixation sur un élément de voilure de l'aéronef,
la turbomachine (1) comportant un compartiment inter-veine (8a) agencé entre une veine primaire (28) et une veine secondaire (26) de la turbomachine, ainsi qu'un bras (22) traversant radialement une veine secondaire (26) et communiquant avec le compartiment inter-veine (8a), ce dernier étant en partie délimité radialement vers l'extérieur par un anneau amont (10) raccordé au bras à l'aide de deux capotages de raccord (30) agencés respectivement de part et d'autre d'une extrémité amont (7) du mât d'accrochage (9), selon une direction transversale (Y) de l'ensemble propulseur,
l'extrémité amont (7) du mât d'accrochage comprenant deux faces latérales (42), ainsi qu'une portée périphérique (46) suivant le contour d'une base (44) de cette extrémité amont de mât (7),
**caractérisé en ce que** l'ensemble propulseur (100) comprend également, associé à au moins l'un des deux capotages de raccord (30), un dispositif de résistance au feu (50) selon l'une quelconque des revendications précédentes, interposé entre l'extrémité amont (7) du mât d'accrochage et le capotage de raccord (30) auquel est fixé le dispositif (50).

9. Ensemble selon la revendication précédente, **caractérisé en ce que** la première extrémité de contact (70a) de la première lèvre de contact (52a) est en appui sur la portée périphérique (46) de l'extrémité amont (7) du mât d'accrochage, et **en ce que** la seconde extrémité de contact (70b) de la seconde lèvre de contact (52b) est en appui sur la face latérale correspondante (42) de l'extrémité amont (7) du mât d'accrochage.

10. Ensemble selon la revendication 8 ou la revendication 9, **caractérisé en ce que** la première ligne courbe (72a) s'inscrit dans une première surface de contact (S1) sensiblement plane, et sensiblement parallèle à la direction transversale (Y) ainsi qu'à une direction longitudinale (X) de l'ensemble (100), et **en ce que** la seconde ligne (72b) définie par la seconde lèvre de contact (52b) est une droite s'étendant sensiblement parallèlement à une direction verticale (Z) de l'ensemble.

## Patentansprüche

1. Brandschutzvorrichtung (50), die dazu bestimmt ist, zwischen einem stromaufwärtigen Ende (7) einer Befestigungsstrebe (9) einer doppelflutigen Flugzeugturbomaschine (1) und einer Verbindungsverkleidung (30), mit der diese Turbomaschine ausgestattet ist, eingefügt zu werden, wobei die Verbindungsverkleidung dazu bestimmt ist, einen stromaufwärts gelegenen Ring (10), der einen Teil eines Zwischenströmungsraums (8a) radial nach außen begrenzt, mit einem Arm (22) zu verbinden, der sich radial durch eine Sekundärströmung (26) der Turbomaschine erstreckt, **dadurch gekennzeichnet, dass** die Vorrichtung Folgendes umfasst:
- eine Kontaktstruktur (73), die eine erste Kontaktlippe (52a) umfasst, die vorzugsweise einen C-Querschnitt aufweist, und ein erstes Kontaktende (70a) definiert, das sich entlang der Länge einer ersten Linie (72a), vorzugsweise einer gekrümmten Linie, erstreckt, wobei die Kontaktstruktur auch an einem der Längsenden (75a) der ersten Kontaktlippe (52a) einen Endabschnitt (71) umfasst, von dem eines der Enden (77a) offen ist und sich in der Fortsetzung der ersten Lippe (52a) befindet und dessen anderes Ende (77b) blockiert ist;
- einen Stützabschnitt (60); und
- eine zweite Kontaktlippe (52b), die vom Stützabschnitt (60) über einen Verbindungsbereich (62) getragen wird, der den Endabschnitt (71) der Kontaktstruktur (73) trägt, wobei die zweite Kontaktlippe (52b) ein zweites Kontaktende (70b) aufweist, das sich über die Länge einer zweiten Linie (72b) erstreckt, die sich von der ersten Linie (72a) unterscheidet, wobei die zweite Kontaktlippe (52b) an einem ihrer Enden einen Blockierabschnitt (63) aufweist, der entlang der zweiten Linie (72b) vorsteht, wobei der Blockierabschnitt (63) in einem Abstand von dem blockierten Ende (77b) des Endabschnitts (71) angeordnet ist und diesem gegenüberliegt.

2. Vorrichtung nach Anspruch 1, **dadurch gekennzeichnet, dass** der Blockierabschnitt (63) eine erste Kontaktfläche (63a) aufweist, die einen Teil des zweiten Kontaktendes (70b) der zweiten Kontaktlippe (52b) bildet, sowie eine zweite Fläche (63b), die der ersten gegenüberliegt und sich von der ersten Kontaktfläche (63a) wegbewegt und sich dem blockierten Ende (77b) des Endabschnitts nähert (71), wobei die zweite Fläche (63b) vorzugsweise gekrümmt ist.

3. Vorrichtung nach Anspruch 1 oder Anspruch 2, **dadurch gekennzeichnet, dass** das blockierte Ende (77b) des Endabschnitts (71) in Richtung des zur zweiten Kontaktlippe (52b) gehörenden Blockierabschnitts (63) eine gewölbte Form aufweist.

4. Vorrichtung nach einem der vorhergehenden Ansprüche, **dadurch gekennzeichnet, dass** der Blockierabschnitt in Richtung der zweiten Linie (72b) im Vergleich zum ersten Kontaktende (70a) zurückversetzt endet.

5. Vorrichtung nach einem der vorhergehenden Ansprüche, **dadurch gekennzeichnet, dass** sie einteilig ist.

6. Vorrichtung nach einem der vorhergehenden Ansprüche, **dadurch gekennzeichnet, dass** die zweite Linie (72b) gerade und vorzugsweise im Wesentlichen orthogonal zu einer ersten im Wesentlichen flachen Kontaktfläche (S1) ist, in die die erste gekrümmte Linie (72a) eingefügt ist.

7. Vorrichtung nach einem der vorhergehenden Ansprüche, **dadurch gekennzeichnet, dass** sie auch einen Befestigungsabschnitt (56) umfasst, der die erste Kontaktlippe (52a) trägt, wobei der Befestigungsabschnitt vorzugsweise von Durchgangslöchern (76) der Befestigungselemente (54) durchquert wird.

8. Antriebsanordnung (100) für ein Flugzeug, die eine doppelflutige Flugzeugturbomaschine (1) sowie eine Befestigungsstrebe (9) der Turbomaschine umfasst, die dazu bestimmt ist, an einem Flügelelement des Flugzeugs befestigt zu werden,
wobei die Turbomaschine (1) eine Zwischenströmungskammer (8a) aufweist, die zwischen einer Primärströmung (28) und einer Sekundärströmung (26) der Turbomaschine angeordnet ist, sowie einen Arm (22), der sich radial durch eine Sekundärströmung (26) erstreckt und mit der Zwischenströmungskammer (8a) in Verbindung steht, wobei letztere teilweise radial nach außen durch einen stromaufwärts gelegenen Ring (10) begrenzt wird, der mit dem Arm über zwei Verbindungsverkleidungen (30) verbunden ist, die jeweils auf beiden Seiten eines stromaufwärtigen Endes (7) der Befestigungsstrebe (9) in einer Querrichtung (Y) der Antriebsanordnung angeordnet sind,
wobei das stromaufwärtige Ende (7) der Befestigungsstrebe zwei Seitenflächen (42) sowie eine Umfangsauflagefläche (46) umfasst, die der Kontur einer Basis (44) dieses stromaufwärtigen Endes der Strebe (7) folgt,
**dadurch gekennzeichnet, dass** die Antriebsanordnung (100) auch in Verbindung mit mindestens einer der beiden Verbindungsverkleidungen (30) eine Brandschutzvorrichtung (50) nach einem der vorhergehenden Ansprüche umfasst, die zwischen dem stromaufwärtigen Ende (7) der Befestigungsstrebe und der Verbindungsverkleidung (30), an der die Vorrichtung (50) angebracht ist, angeordnet ist.

9. Anordnung nach dem vorhergehenden Anspruch, **dadurch gekennzeichnet, dass** das erste Kontaktende (70a) der ersten Kontaktlippe (52a) auf der Umfangsauflagefläche (46) des stromaufwärtigen Endes (7) der Befestigungsstrebe aufliegt, und dadurch, dass das zweite Kontaktende (70b) der zweiten Kontaktlippe (52b) auf der entsprechenden Seitenfläche (42) des stromaufwärtigen Endes (7) der Befestigungsstrebe aufliegt.

10. Anordnung nach Anspruch 8 oder Anspruch 9, **dadurch gekennzeichnet, dass** die erste gekrümmte Linie (72a) in einer ersten im Wesentlichen flachen Kontaktfläche (S1) eingefügt ist und im Wesentlichen parallel zur Querrichtung (Y) sowie zu einer Längsrichtung (X) der Anordnung (100) verläuft, und dadurch, dass die zweite Linie (72b), die durch die zweite Kontaktlippe (52b) definiert wird, eine gerade Linie ist, die sich im Wesentlichen parallel zu einer vertikalen Richtung (Z) der Anordnung erstreckt.

## Claims

1. Fire resistance device (50) intended to be placed between an upstream end (7) of a mounting strut (9) of a double-flow aircraft turbomachine (1), and a connecting cowling (30) equipping this turbomachine, said connecting cowling being intended to connect an upstream ring (10) radially delimiting towards the outside a portion of an inter-flow compartment (8a), to an arm (22) that extends radially across a secondary flow (26) of the turbomachine, **characterised in that** the device comprises:
- a contact structure (73) comprising a first contacting lip (52a), preferably having a C-shaped section, and defining a first contact end (70a) extending along a first line (72a), preferably a curved line, the contact structure also comprising, at one of the longitudinal ends (75a) of the first contacting lip (52a), an end section (71) one of the ends (77a) of which is open and is in the continuation of the first lip (52a), and the other end (77b) of which is blocked;
- a support portion (60); and
- a second contacting lip (52b) supported by the support portion (60) via a junction area (62) that supports the end section (71) of the contact structure (73), the second contacting lip (52b) having a second contact end (70b) extending along a second line (72b) different from the first line (72a), the second contacting lip (52b) having at one of its ends a blocking portion (63) protruding according to the second line (72b), the blocking portion (63) being located at a distance from and facing the blocked end (77b) of the end section (71).

2. Device according to claim 1, **characterised in that** the blocking portion (63) has a first contact face (63a) forming a portion of the second contact end (70b) of the second contacting lip (52b), as well as a second face (63b) opposite the first and moving away from the first contact face (63a) by moving closer to the blocked end (77b) of the end section (71), the second face (63b) preferably being curved.

3. Device according to claim 1 or claim 2, **characterised in that** the blocked end (77b) of the end section (71) has a domed shape in the direction of the blocking portion (63) belonging to the second contacting lip (52b).

4. Device according to any one of the preceding claims, **characterised in that** in the direction of the second line (72b), the blocking portion (63) ends set back in relation to the first contact end (70a).

5. Device according to any one of the preceding claims, **characterised in that** it is in one piece.

6. Device according to any one of the preceding claims, **characterised in that** said second line (72b) is straight, and preferably substantially orthogonal to a first substantially flat contact surface (S1) wherein is inscribed the first curved line (72a) .

7. Device according to any one of the preceding claims, **characterised in that** it also comprises a fastening portion (56) supporting the first contacting lip (52a), said fastening portion preferably being traversed by fastening element (54) through holes (76).

8. Propulsion unit (100) for aircraft comprising a double-flow aircraft turbomachine (1), as well as a mounting strut (9) of the turbomachine intended to fasten it on a wing element of the aircraft,
the turbomachine (1) including an inter-flow compartment (8a) arranged between a primary flow (28) and a secondary flow (26) of the turbomachine, as well as an arm (22) that extends radially across a secondary flow (26) and communicating with the inter-flow compartment (8a), the latter being partly radially delimited towards the outside by an upstream ring (10) connected to the arm with the aid of two connecting cowlings (30) respectively arranged on either side of an upstream end (7) of the mounting strut (9), in a transverse direction (Y) of the propulsion unit,
the upstream end (7) of the mounting strut comprising two lateral faces (42), as well as a peripheral bearing surface (46) following the contour of a base (44) of this upstream strut end (7),
**characterised in that** the propulsion unit (100) also comprises, associated with at least one of the two connecting cowlings (30), a fire resistance device (50) according to any one of the preceding claims, placed between the upstream end (7) of the mounting strut and the connecting cowling (30) to which the device (50) is fastened.

9. Unit according to the preceding claim, **characterised in that** the first contact end (70a) of the first contacting lip (52a) rests on the peripheral bearing surface (46) of the upstream end (7) of the mounting strut, and **in that** the second contact end (70b) of the second contacting lip (52b) rests on the corresponding lateral face (42) of the upstream end (7) of the mounting strut.

10. Unit according to claim 8 or claim 9, **characterised in that** the first curved line (72a) is inscribed in a first substantially flat contact surface (S1), and substantially parallel with the transverse direction (Y) as well as with a longitudinal direction (X) of the unit (100), and **in that** the second line (72b) defined by the second contacting lip (52b) is a straight line extending substantially parallel with a vertical direction (Z) of the unit.
